# EUROPÄISCHE PATENTSCHRIFT

(11) **EP 3 241 998 B1**
(45) Veröffentlichungstag und Bekanntmachung des Hinweises auf die Patenterteilung: **12.06.2019**
(21) Anmeldenummer: 17168661.1
(22) Anmeldetag: 28.04.2017
(51) Int. Cl.: F01D 25/00, F01D 25/18

(54) **TURBOFANTRIEBWERK UND VERFAHREN ZUM ABFÜHREN VON ABBLASELUFT EINES ÖLABSCHEIDERS IN EINEM TURBOFANTRIEBWERK**
TURBOFAN ENGINE AND A METHOD FOR EXHAUSTING BREATHER AIR OF AN OIL SEPARATOR IN A TURBOFAN ENGINE
TURBOPROPULSEUR ET PROCÉDÉ D'ÉVACUATION DE L'AIR D'UN SÉPARATEUR D'HUILE DANS UN TURBOPROPULSEUR

(30) Priorität: 02.05.2016 DE 102016108068
(43) Veröffentlichungstag der Anmeldung: 08.11.2017
(73) Patentinhaber: Rolls-Royce Deutschland Ltd & Co KG, 15827 Blankenfelde-Mahlow (DE)
(72) Erfinder: BEIER, Jürgen, 15732 Schulzendorf (DE); BLUMRICH, Markus, 10247 Berlin (DE)
(74) Vertreter: Müller, Wolfram Hubertus

(56) Entgegenhaltungen:
- EP-A2- 1 998 011
- EP-A2- 2 336 503
- GB-A- 2 376 269
- US-A1- 2012 060 508

## Beschreibung

Die Erfindung betrifft ein Turbofantriebwerk gemäß dem Oberbegriff des Patentanspruchs 1 und ein Verfahren zum Abführen von Abblaseluft eines Ölabscheiders in einem Turbofantriebwerk.

Es ist bekannt, dass Druckluft, die zum pneumatischen Abdichten der Lagergehäuse eines Triebwerks verwendet wird, sich mit Schmieröl vermischt. Zur Trennung des Schmieröls von der Druckluft wird ein Ölabscheider (auch als "breather" bezeichnet) verwendet. Beispielsweise ist es bekannt, hierzu einen Zentrifugalölabscheider einzusetzen. Abgeschiedenes Öl wird vom Ölabscheider dem Öltank zugeführt, so dass es im Ölkreislauf verbleibt. Die verbleibende Druckluft, aus der Schmieröl abgetrennt worden ist, wird über eine Entlüftungsleitung des Ölabscheiders abgeblasen.

Dabei ist es bekannt, die Entlüftungsluft, im Folgenden auch als Abblaseluft bezeichnet, an der Triebwerksgondel oder an der Triebwerksaufhängung ins Freie abzublasen. Eine solche Vorgehensweise ist beispielsweise in der EP 2 253 538 B1 beschrieben.

Die Abblaseluft enthält allerdings immer noch einen gewissen Restölanteil, der wesentliche Ursache des kontinuierlichen Ölverbrauchs eines Triebwerks ist und der zu einer Verschmutzung der Verkleidung des Triebwerks bzw. der Triebwerksaufhängung führen kann. Diese Verschmutzung ist aus ästhetischen Gründen unerwünscht und kann aufgrund des durch eine hohe Triebwerkstemperatur bedingten Einbrennens in die Verkleidung nur mit aufwändigen Reinigungsmaßnahmen entfernt werden.

Aus der DE 10 2007 026 060 A1 ist es bekannt, eine Entlüftungsleitung eines Schmierölsystems hinter dem eigentlichen Triebwerk am Umfang des austretenden heißen Triebwerkstrahls anzuordnen.

Die US 8 621 839 B2 beschreibt ein Schmierölsystem, bei dem einem mit dem Hilfsgeräteträger des Triebwerks verbundenen Ölabscheider eine Ölsammelvorrichtung zugeordnet ist, in der die Entlüftungsluft des Ölabscheiders gekühlt und zusätzlich Öl abgeschieden wird. Die Ölsammelvorrichtung ist in einer Strebe ausgebildet, die im Sekundärstromkanal des Triebwerks angeordnet ist. Die Ölsammelvorrichtung weist ein Auslassfenster auf, von dem die zweifach von Öl gereinigte Luft in den Mantelstrom abgegeben wird. Das in der Ölsammelvorrichtung abgeschiedene Öl wird gesammelt und nach dem Ende des Flugs an den Ölabscheider zurückgeführt.

Die EP 1 998 011 A1 offenbart eine Entlüftung für das Schmierölsystem eines Strahltriebwerks, bei dem die Luftauslassöffnung einer Entlüftungsleitung hinter dem Düsenhals am Umfang des austretenden Triebwerksstrahls angeordnet ist.

Die GB 2 376 269 A beschreibt ein Turbofan-Triebwerk, bei dem in einem Sekundärstromkanal des Triebwerks ein Nachleitrad mit Leitschaufeln angeordnet ist. Ein Ölabscheider eines Hilfsgeräteträgers weist eine Ausgangsleitung auf, die durch Passagen in einer Leitschaufel des Nachleitrads ausgebildet ist. Die vom Ölabscheider abgegebene, mit Ölresten kontaminierte Abblaseluft wird durch Öffnungen an der Außenseite der Leitschaufel in den Sekundärstromkanal abgeblasen.

Aus der EP 2 336 503 A2 ist es bekannt, dass durch Öl verunreinigte Abluft zunächst in eine Beruhigungskammer im Inneren eines Abgaskonus geleitet wird. Von dort wird das Öl über eine im Abgasstrom positionierte Venturidüse 14 in den Abgasstrom ausgetragen. Dabei wird die verunreinigte Abluft in den Primärstromkanal eingeleitet.

Der vorliegenden Erfindung liegt die Aufgabe zu Grunde, ein Turbofantriebwerk und ein und Verfahren zum Abführen von Abblaseluft eines Ölabscheiders bereitzustellen, die eine Reduzierung der sichtbaren Emissionen eines Ölabscheiders erreichen.

Diese Aufgabe wird durch ein Turbofantriebwerk mit den Merkmalen des Anspruchs 1 und ein Verfahren mit den Merkmalen des Anspruchs 11 gelöst. Ausgestaltungen der Erfindung sind in den Unteransprüchen angegeben.

Danach betrachtet die vorliegende Erfindung ein Turbofantriebwerk, das einen Primärstromkanal, einen Sekundärstromkanal und einen Ölabscheider umfasst. Der Ölabscheider wird typischerweise von einem Hauptgetriebe eines Hilfsgeräteträgers des Triebwerks angetrieben. Er weist eine Rohrleitung zum Ableiten von Abblaseluft auf, die ein Rohrleitungsende ausbildet. Es ist vorgesehen, dass das Rohrleitungsende im Sekundärstromkanal angeordnet und dazu vorgesehen und ausgebildet ist, Abblaseluft direkt (d.h. ohne Durchlaufen weiterer Strukturen hinter dem Rohrleitungsende) vom Rohrleitungsende in den Sekundärstromkanal abzugeben.

Die Erfindung sieht vor, dass die Rohrleitung des Ölabscheiders zumindest teilweise in einer in den Sekundärstromkanal integrierten Struktur verläuft. Dabei ist vorgesehen, dass das Rohrleitungsende von dem axial hinteren, stromabwärts angeordneten Ende der Struktur in Strömungsrichtung absteht. Die Erfindung sieht weiter vor, dass das Rohrleitungsende in den hinteren 20 % der axialen Länge des Sekundärstromkanals in diesem angeordnet ist. Die vom Rohrleitungsende abgegebene Abblaseluft wird somit erst im in axialer Richtung hinteren Bereich des Sekundärstromkanals in den Sekundärstrom abgeblasen, und damit in relativ geringem Abstand vor dem Mischer.

Die vorliegende Erfindung beruht damit auf dem Gedanken, mit Ölresten kontaminierte Abblaseluft in den Sekundärstrom des Triebwerks (auch als Mantelstrom oder Nebenstrom bezeichnet) abzublasen. Dort wird die Abblaseluft derart verdünnt, dass keine sichtbaren Überreste wahrnehmbar sind. Auch verhält es sich so, dass die mit Ölresten kontaminierte Abblaseluft keine sichtbaren Außenverkleidungen des Triebwerks passiert, so dass die Gefahr sichtbarer Verschmutzungen reduziert ist. Eine zusätzliche Verdünnung der Abblaseluft bzw. darin enthaltener Ölreste kann im Triebwerksmischer erfolgen, der am Triebwerksaustritt eine Vermischung von Primärstrom und Sekundärstrom vornimmt.

Mit der Erfindung ist der weitere Vorteil verbunden, dass am Rohrleitungsende der mit dem Ölabscheider verbundenen Rohrleitung aufgrund der Anordnung im Sekundärstromkanal ein größerer Druck vorliegt verglichen mit der Situation, dass die Abblaseluft in die Umgebung abgeblasen wird. Dies bedeutet, dass in der Druckkette zwischen Öltank, Ölabscheider und Rohrleitungsende ein höherer Druck am Rohrleitungsende vorliegt. Da im Öltank allgemein ein definierter Mindestdruck vorliegen muss, damit eine mit dem Öltank verbundene Ölpumpe sicher betrieben werden kann, ist es bekannt, zwischen Öltank und Ölabscheider ein druckerhöhendes Ventil, auch als PRV (PRV = "pressure raising valve") bezeichnet, anzuordnen. Wenn nun gemäß der vorliegenden Erfindung am Außenende der Druckkette, nämlich am Rohrleitungsende, ein höherer Druck vorliegt (da das Rohrleitungsende im Sekundärstromkanal endet), kann ein solches druckerhöhendes Ventil eingespart oder für einen geringeren Druck ausgelegt werden.

Gemäß einer Ausgestaltung der Erfindung ist vorgesehen, dass das Rohrleitungsende an einem Endabschnitt der Rohrleitung ausgebildet ist, der parallel zur Strömungsrichtung verläuft, die der Sekundärstrom benachbart zum Endabschnitt ausbildet. Unter einer parallelen Ausrichtung des Endabschnitts zur Strömungsrichtung im Sekundärstromkanal wird dabei auch eine Ausrichtung verstanden, die geringfügig von einer exakt parallelen Ausrichtung abweicht, nämlich um maximal 10°.

Der Endabschnitt ist beispielsweise geradlinig oder leicht gekrümmt ausgebildet. Dabei kann vorgesehen sein, dass der Endabschnitt auf einer Meridionalstromlinie im Sekundärstromkanal verläuft, also einer Stromlinie, die über die Länge des Sekundärstromkanals das gleiche Abstandsverhältnis zu Innenwand und Außenwand des Sekundärstromkanals aufweist.

Dabei ist gemäß einer Ausgestaltung der Erfindung eine Mindestlänge des Endabschnitts vorgesehen, die sicherstellt, dass die Abblaseluft bereits die gleiche Strömungsrichtung wie der Sekundärstrom aufweist, wenn die Abblaseluft in den Sekundärstrom abgeblasen wird. Hierdurch wird eine Verwirbelung der Abblaseluft im Sekundärstrom verhindert oder reduziert. Beispielsweise ist diese Mindestlänge gleich dem Innendurchmesser des Rohrleitungsendes, insbesondere gleich dem Fünffachen des Innendurchmessers des Rohrleitungsendes. Sofern das Rohrleitungsende nicht rund ist, wird als Innendurchmesser der größte Innendurchmesser bezeichnet, d.h. die Mindestlänge ist gleich dem größten Innendurchmesser des Rohrleitungsendes oder gleich dem Fünffachen des größten Innendurchmessers des Rohrleitungsendes.

Eine Ausgestaltung der Erfindung sieht vor, dass das Rohrleitungsende derart im Sekundärstromkanal platziert ist, dass zumindest ein Teil der vom Rohrleitungsende abgegebenen Abblaseluft dem Mischer zugeführt wird, der am Triebwerksende eine Vermischung von Primärstrom und Sekundärstrom vornimmt. Beispielsweise ist das Rohrleitungsende derart im Sekundärstromkanal platziert, dass mindestens 30%, insbesondere mindestens 50%, insbesondere mindestens 70% der vom Rohrleitungsende abgegebenen Abblaseluft dem Mischer zugeführt und in diesem mit Luft des Primärstromkanals vermischt wird. Da der Mischer die Abblaseluft zusätzlich verdünnt ist es vorteilhaft, zumindest einen Teil der Abblaseluft dem Mischer zuzuführen. Dabei kann es ebenfalls vorteilhaft sein, nicht die gesamte Abblaseluft dem Mischer zuzuführen, sondern einen Teil im Sekundärstromkanal am Mischer vorbei zu führen, um die Abblaseluft mit den Ölresten über eine möglichst große Austrittsfläche zu verteilen.

Der Sekundärstromkanal weist eine radial innere Strömungspfadberandung und eine radial äußere Strömungspfadberandung auf, die nachfolgend als Innenwand und Außenwand bezeichnet werden. Gemäß einer Ausgestaltung der Erfindung ist vorgesehen, dass das Rohrleitungsende näher zur Innenwand angeordnet ist, wobei jedoch ein Mindestabstand zur Innenwand vorliegen sollte, der beispielsweise der Länge des Durchmessers des Rohrleitungsendes entspricht. Durch Einhaltung eines Mindestabstands wird sichergestellt, dass die angrenzende Wand des Sekundärstromkanals nicht durch die in der Abblaseluft enthaltenen Ölreste verschmutzt wird. Durch Anordnung des Rohrleitungsendes näher zur Innenwand des Sekundärstromkanals kann sichergestellt werden, dass ein definierter Anteil der Abblaseluft oder sogar die gesamte Abblaseluft dem Mischer am Triebwerksaustritt zugeführt wird.

Es wird jedoch darauf hingewiesen, dass alternativ vorgesehen sein kann, dass das Rohrleitungsende näher zur Außenwand des Sekundärstromkanals angeordnet ist, wobei wiederum ein Mindestabstand von der Außenwand vorliegen sollte, der beispielsweise gleich der Länge des Durchmessers des Rohrleitungsendes ist.

Die Erfindung sieht vorzugsweise vor, dass das Rohrleitungsende in den hinteren 10 % der axialen Länge des Sekundärstromkanals in diesem angeordnet ist.

Die axiale Länge des Sekundärströmungskanals ist dabei definiert als der axiale Abstand zwischen dem stromaufwärtigen Ende eines Strömungsteilers (Splitters), ab dem der Primärstromkanal und der Sekundärstromkanal voneinander getrennt sind, und dem stromabwärtigen Ende des Sekundärstromkanals, das durch einen Mischer gebildet sein kann.

Dabei kann zusätzlich vorgesehen sein, dass das Rohrleitungsende an einem Ort im Sekundärstromkanal platziert ist, hinter dem sich in Strömungsrichtung keine Strukturen im Sekundärstromkanal mehr befinden, insbesondere keine Streben oder Strukturen zum Führen von Leitungen. Auch kann vorgesehen sein, dass sich hinter dem Rohrleitungsende keine Öffnungen für Zapfluft im Sekundärstromkanal befinden. Durch die Vermeidung von Strukturen jeglicher Art hinter dem Ort, an dem die Abblaseluft in den Sekundärstrom abgeblasen wird, wird verhindert, dass solche Strukturen mit Ölresten kontaminiert werden. Auch wird eine Verwirbelung der Abblaseluft an solchen Strukturen verhindert.

Bei der in den Sekundärstromkanal integrierten Struktur handelt es sich beispielsweise um eine Strebe (auch als "Splitter" bezeichnet), die eine gewisse axiale Ausdehnung besitzt und sich bei geringer Ausdehnung in Umfangsrichtung in radialer Richtung im Sekundärstromkanal erstreckt, wobei die Strebe dazu dient, Rohrleitungen beispielsweise für Druckluft, Treibstoff und Öl sowie Kabel aufzunehmen und solche Leitungen und Kabel geschützt in radialer Richtung durch den Sekundärstromkanal zu führen. Die Strebe erstreckt sich bevorzugt stromabwärts einer ringförmigen Stützstruktur, die das Fangehäuse strukturell stützt, nämlich zwischen einer solchen Stützstruktur und dem einem Mischer.

Es kann vorgesehen sein, dass ein hinterer Abschnitt der vom Ölabscheider kommenden Ölleitung rechtwinklig ausgebildet ist, wobei ein erster Abschnitt in die Strebe in radialer Richtung hineinragt und ein senkrecht vom ersten Abschnitt abstehender zweiter Abschnitt (Endabschnitt) aus dem axial hinteren Ende der Strebe herausragt und Abblaseluft beanstandet vom axial hinteren Ende der Strebe in den Sekundärstromkanal abbläst. Im Endabschnitt wird die Abblaseluft dabei parallel zur Strömungsrichtung im Sekundärstrom ausgerichtet, bevor sie abgeblasen und mit dem Sekundärstrom vermischt wird.

Eine weitere Ausgestaltung der Erfindung sieht vor, dass die Rohrleitung zwischen dem Ölabscheider und dem Rohrleitungsende ohne Schleifen ausgebildet ist und derart verläuft, dass sie bei Anordnung des Turbofantriebwerks an der Tragfläche eines Flugzeugs einen Anstieg zum Rohrleitungsende hin aufweist. Der Ölabscheider ist im montierten Triebwerk somit tiefer gelegen als das Rohrleitungsende. Hierdurch wird erreicht, dass in der Rohrleitung abgeschiedenes Öl zum Ölabscheider zurückfließt.

Die Erfindung betrifft auch ein Verfahren zum Abführen von Abblaseluft eines Ölabscheiders in einem Turbofantriebwerk, bei dem Abblaseluft mittels einer Rohrleitung des Ölabscheiders, die ein Rohrleitungsende umfasst, abführt wird. Es ist vorgesehen, dass die Abblaseluft mittels der Rohrleitung direkt in den Sekundärstromkanal abgeführt wird, wobei das Rohrleitungsende im Sekundärstromkanal angeordnet ist und die Abblaseluft von diesem direkt (d.h. ohne Durchlaufen weiterer Strukturen hinter dem Rohrleitungsende) in den Sekundärstromkanal abgeführt wird.

Gemäß einer Ausgestaltung dieses Verfahrens ist vorgesehen, dass die Abblaseluft vor ihrem Abblasen in einem Endabschnitt der Rohrleitung, der im Sekundärstromkanal angeordnet ist und in diesem im Wesentlichen parallel zur Strömungsrichtung verläuft, transportiert wird. Anschließend wird die Abblaseluft parallel zur Strömungsrichtung abgeblasen. In dem parallel zur Strömungsrichtung ausgerichteten Endabschnitt erfährt die Abblaseluft eine Ausrichtung in Strömungsrichtung, so dass sie im Wesentlichen ohne Verwirbelungen in den Sekundärstrom abgeblasen werden kann.

Eine Ausgestaltung der Erfindung sieht vor, dass die Abblaseluft derart vor dem Mischer, der eine Vermischung von Primärstrom und Sekundärstrom vornimmt, in den Sekundärstromkanal abgeblasen wird, dass ein Teil der abgeblasenen Abblaseluft dem Mischer zugeführt und ein Teil der abgeblasenen Abblaseluft am Mischer vorbeigeführt wird. Hierdurch wird erreicht, dass die Abblaseluft über eine möglichst große Austrittsfläche verteilt wird.

Die Erfindung wird nachfolgend unter Bezugnahme auf die Figuren der Zeichnung anhand mehrerer Ausführungsbeispiele näher erläutert. Es zeigen:
- Figur 1: eine vereinfachte schematische Schnittdarstellung eines Turbofantriebwerks, wobei das Turbofantriebwerk einen an einem Fangehäuse angeordneten Hilfsgeräteträger mit einem Ölabscheider umfasst;
- Figur 2: ein Turbofantriebwerk entsprechend der Figur 1, wobei der Hilfsgeräteträger mit dem Ölabscheider an der Außenhülle des Kerntriebwerks angeordnet ist;
- Figur 3: ein Turbofantriebwerk gemäß Figur 1 nach dem Stand der Technik, wobei eine Luftaustrittsleitung des Ölabscheiders am Außenumfang der Triebwerksgondel endet;
- Figur 4: ein Ausführungsbeispiel eines Turbofantriebwerks, bei dem die Luftaustrittsleitung eines am Fangehäuse angeordneten Ölabscheiders im Sekundärstromkanal endet;
- Figur 5: ein Ausführungsbeispiel eines Turbofantriebwerks, bei dem die Luftaustrittsleitung eines an der Außenhülle des Kerntriebwerks angeordneten Ölabscheiders im Sekundärstromkanal endet;
- Figur 6: ein weiteres Ausführungsbeispiel eines Turbofantriebwerks, bei dem die Luftaustrittsleitung eines am Fangehäuse angeordneten Ölabscheiders kurz vor dem Mischer im Sekundärstromkanal endet;
- Figur 7: ein weiteres Ausführungsbeispiel eines Turbofantriebwerks, bei dem die Luftaustrittsleitung eines an der Außenhülle des Kerntriebwerks angeordneten Ölabscheiders kurz vor dem Mischer im Sekundärstromkanal endet;
- Figur 8: eine perspektivische Ansicht der Außenhülle eines Kerntriebwerks unter Darstellung einer sich im (nicht dargestellten) Sekundärstromkanal in radialer Richtung erstreckenden Strebe, die einen Abschnitt der Luftaustrittsleitung eines Ölabscheiders aufnimmt;
- Figur 9: eine erste Detailansicht der Anordnung der Figur 8;
- Figur 10: eine zweite Detailansicht der Anordnung der Figur 8; und
- Figur 11: schematisch die Anordnung des Endabschnitts einer Luftaustrittsleitung eines Ölabscheiders im Sekundärstromkanal eines Turbofantriebwerks.

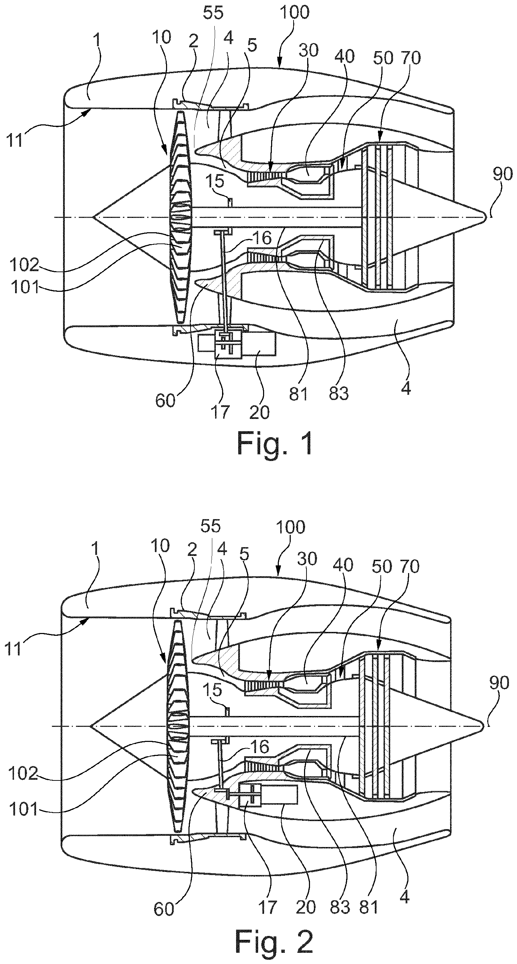

Die Figuren 1 und 2 zeigen schematisch ein Turbofantriebwerk 100, das eine Fanstufe mit einem Fan 10 als Niederdruckverdichter, einen Hochdruckverdichter 30, eine Brennkammer 40, eine Hochdruckturbine 50 und eine Niederdruckturbine 70 aufweist.

Das Turbofantriebwerk 100 umfasst zwei separate Wellen, eine Niederdruckwelle 81, die die Niederdruckturbine 70 mit dem Fan 10 verbindet und eine Hochdruckwelle 83, die die Hochdruckturbine 50 mit dem Hochdruckverdichter 30 verbindet. Wenn das Turbofantriebwerk zusätzlich einen Mitteldruckverdichter und eine Mitteldruckturbine besitzt, ist des Weiteren eine Mitteldruckwelle vorhanden, die die Mitteldruckturbine mit dem Mitteldruckverdichter verbindet.

Das Turbofantriebwerk 100 weist eine Triebwerksgondel 1 auf, die eingangsseitig einen Triebwerkseinlauf 11 ausbildet, der einströmende Luft dem Fan 10 zuführt. Der Fan 10 weist eine Mehrzahl von Fan-Schaufeln 101 auf, die mit einer Fan-Scheibe 102 verbunden sind. Der Annulus der Fan-Scheibe 102 bildet dabei die radial innere Begrenzung des Strömungspfads durch den Fan 10. Radial außen wird der Strömungspfad durch ein Fangehäuse 2 begrenzt. Stromaufwärts der Fan-Scheibe 102 ist ein Nasenkonus angeordnet.

Hinter dem Fan 10 bildet das Turbofantriebwerk 100 einen Sekundärstromkanal 4 und einen Primärstromkanal 5 aus. Der angesaugte Luftmassenstrom wird dabei hinter dem Fan 10 durch einen so genannten Splitter 55 oder Strömungsteiler in einen Sekundärstrom und einen Primärstrom aufgesplittet, die durch den Sekundärstromkanal 4 bzw. den Primärstromkanal 5 strömen. Der Primärstromkanal 5 führt durch das Kerntriebwerk, das die durch den Hochdruckverdichter 30, die Brennkammer 40 und die Hochdruckturbine 50 gebildete Gasturbine umfasst. Der Primärstromkanal 5 ist von einem Umfangsgehäuse 60 umgeben, das innenseitig eine Ringraumfläche bildet, die den Primärstromkanal 5 radial außen begrenzt. Radial innen ist der Primärstromkanal 5 durch entsprechende Kranzoberflächen der Rotoren und Statoren der jeweiligen Verdichterstufen bzw. durch die Nabe oder mit der Nabe verbundene Elemente der entsprechenden Antriebswelle begrenzt.

Im Betrieb des Turbofantriebwerks 100 durchströmt ein Primärstrom den Primärstromkanal 5 mit dem Gasgenerator 30, 40, 50. Der Sekundärstromkanal 4, auch als Nebenstromkanal, Mantelstromkanal oder Bypass-Kanal bezeichnet, leitet im Betrieb des Turbofantriebwerks 100 vom Fan 10 angesaugte Luft an der Gasturbine 30, 40, 50 vorbei.

Die beschriebenen Komponenten besitzen eine gemeinsame Symmetrieachse 90. Die Symmetrieachse 90 definiert eine axiale Richtung des Turbofantriebwerks. Eine radiale Richtung des Turbofantriebwerks verläuft senkrecht zur axialen Richtung.

Das Triebwerk 100 umfasst des Weiteren einen Hilfsgeräteträger 17, der über eine Hauptwelle eine Mehrzahl von Hilfsgeräten antreibt. Unter anderem wird als Hilfsgerät ein Ölabscheider 20 angetrieben. Der Hilfsgeräteträger 17 ist über eine Radialwelle 16 und ein Winkelgetriebe 15 mit der Niederdruckwelle 81 gekoppelt. Alternativ kann vorgesehen sein, dass der Hilfsgeräteträger 17 über eine Radialwelle und ein Winkelgetriebe mit der Hochdruckwelle 81 gekoppelt ist. Bei der Figur 1 ist der Hilfsgeräteträger 17 mit dem Ölabscheider 20 an der Außenseite des Fangehäuses 2 angeordnet. Bei der Figur 2 ist alternativ dazu vorgesehen, dass der Hilfsgeräteträger 17 mit dem Ölabscheider 20 an der Außenhülle des Kerntriebwerks angeordnet ist, zum Beispiel am Umfangsgehäuse 60 oder einer damit verbundenen Struktur.

Der Ölabscheider 20 erfüllt die Funktion, das Schmieröl des Triebwerks-Schmierölsystems von Druckluft zu trennen. Beispielsweise handelt es sich um einen Zentrifugalölabscheider. Abgeschiedenes Öl wird vom Ölabscheider 20 einem Öltank (nicht dargestellt) zugeführt, so dass es im Ölkreislauf des Triebwerks-Schmierölsystems verbleibt. Die verbliebene Druckluft, aus der Schmieröl abgetrennt worden ist, wird über eine Luftaustrittsleitung des Ölabscheiders 20 abgeblasen.

Im Kontext der vorliegenden Erfindung sind die Ausgestaltung einer solchen Luftaustrittsleitung und die Platzierung des Endes der Luftaustrittsleitung im Triebwerk von besonderer Bedeutung, wie nachfolgend erläutert werden wird.

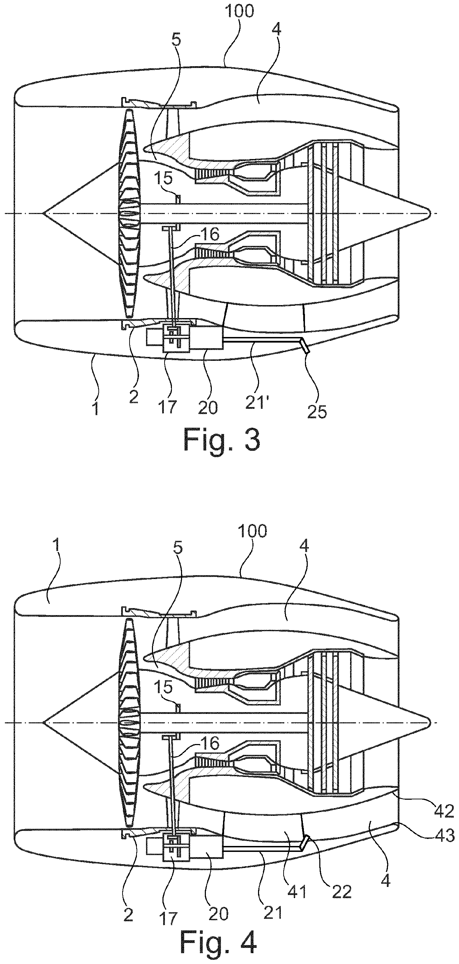

Bevor auf die vorliegende Erfindung eingegangen wird, wird zum besseren Verständnis des Hintergrunds der Erfindung die Ausgestaltung einer Luftaustrittsleitung gemäß dem Stand der Technik anhand der Figur 3 erläutert. Gemäß der Figur 3 ist vorgesehen, dass eine mit dem Ölabscheider 20 verbundene Luftaustrittsleitung 21' an die Außenhülle bzw. die Verkleidung der Triebwerksgondel 1 geführt wird. Die in der Luftaustrittsleitung 21' enthaltene Abblaseluft 25 enthält einen Restölanteil. Das Abblasen der Abblaseluft an der Triebwerksverkleidung führt zu einer Verschmutzung derselben, die aus ästhetischen Gründen unerwünscht ist.

Die Figur 4 zeigt schematisch ein Ausführungsbeispiel der Erfindung. Ein Hilfsgeräteträger 17 treibt über eine Hauptwelle (nicht dargestellt) unter anderem einen Ölabscheider 20 an. In dem Ölabscheider 20 wird Schmieröl von Druckluft getrennt. Der Ölabscheider 20 weist eine Luftaustrittsleitung 21 auf, die eine Rohrleitung zum Ableiten der Abblaseluft des Ölabscheiders 20 ist und die eine Mischung von warmer Luft und einem Restölanteil enthält. Die im Ölabscheiders 20 abgetrennte und über die Luftaustrittsleitung 21 abgeblasene Druckluft wird auch als Abblaseluft bezeichnet. Die Luftaustrittsleitung 21 kann flexibel oder starr ausgebildet sein und grundsätzlich aus einem beliebigen Material bestehen, das bei den vorliegenden Temperaturen beständig ist. Sie kann zumindest abschnittsweise einen konstanten Duchmesser aufweisen. Es handelt sich bei der Luftaustrittsleitung 21 beispielsweise um ein Metallrohr. Die Luftaustrittsleitung 21 wird im Folgenden auch als Rohrleitung bezeichnet.

Die Rohrleitung 21 weist ein Rohrleitungsende 22 auf, das im Sekundärstromkanal 4 des Turbofantriebwerks 100 angeordnet ist und Abblaseluft direkt, d.h. ohne dass die Abblaseluft hinter dem Rohrleitungsende 22 noch weitere Komponenten wie z.B. eine weitere Ölabscheidevorrichtung oder eine Ölsammelvorrichtung durchläuft, in den Sekundärströmungskanal 4 abführt bzw. abbläst. Aus dem Rohrleitungsende 22 austretende Abblaseluft wird vom Rohrleitungsende 22 direkt in den Sekundärstromkanal 4 abgegeben.

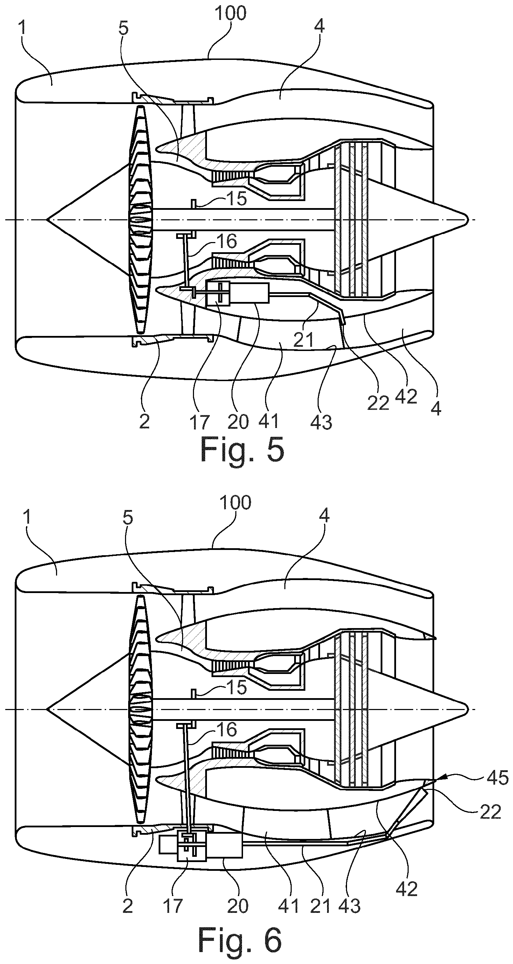

Bei der Figur 4 ist der Hilfsgeräteträger 17 mit dem Ölabscheider 20 entsprechend der Figur 1 an der Außenseite des Fangehäuses 2 angeordnet. Die gemäß der vorliegenden Erfindung vorgesehene direkte Abgabe von Abblaseluft in den Sekundärstromkanal 4 kann ebenso bereitgestellt werden, wenn der Hilfsgeräteträger 17 mit dem Ölabscheider 20 entsprechend der Figur 2 am Umfangsgehäuse 60 bzw. an der Außenhülle des Kerntriebwerks angeordnet ist. Die Figur 5 zeigt bei einer solchen Anordnung eine Rohrleitung 21, die vom Ölabscheider 20 in den Sekundärstromkanal 4 geführt ist und deren Ende 22 im Sekundärstromkanal 4 angeordnet ist, um mit Öl kontaminierte Abblaseluft direkt in den Sekundärstromkanal 4 abzublasen.

Die Figuren 4 und 5 zeigen des Weiteren eine im Sekundärstromkanal 4 angeordnete Struktur 41, die sich bei geringer Ausdehnung in Umfangsrichtung in radialer Richtung zwischen Innenwand 42 und Außenwand 43 des Sekundärstromkanals 4 erstreckt und dabei eine gewisse axiale Ausdehnung besitzt. Es handelt sich bei der Struktur 41 beispielsweise um eine Strebe (auch als Splitter bezeichnet), die der radialen Durchführung z.B. von Triebwerksinstrumentierungen und Leitungen für Druckluft, Treibstoff oder Öl dient. Das Rohrleitungsende 22 ist - bezogen auf die Strömungsrichtung - hinter der Struktur 41 im Sekundärstromkanal 4 angeordnet ist.

Bei der Ausgestaltung der Figur 4 wird die Rohrleitung 21 von außen dem Sekundärstromkanal 4 zugeführt. Bei der Ausgestaltung der Figur 5 wird die Rohrleitung 21 von innen dem Sekundärstromkanal 4 zugeführt.

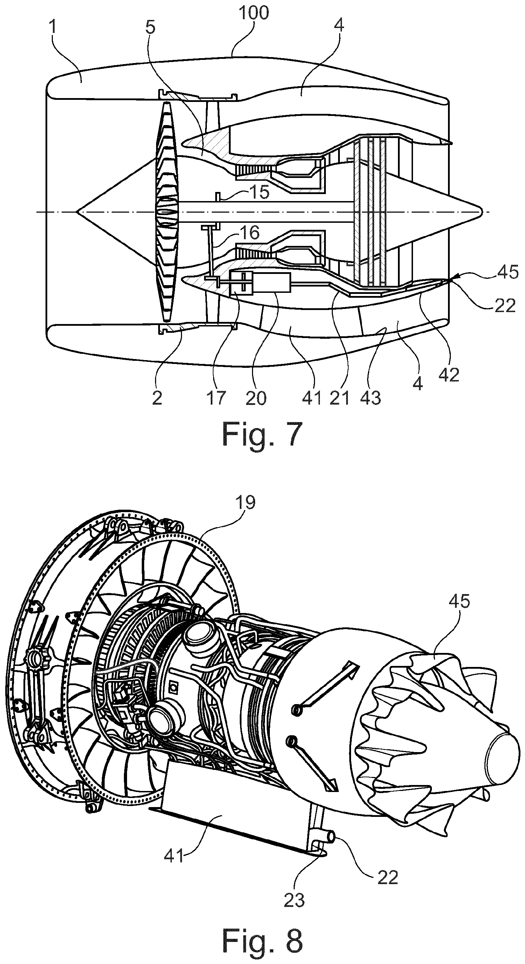

Es wird darauf hingewiesen, dass die Darstellung der Rohrleitung 21 in den Figuren 4 und 5 und auch in den nachfolgend erläuterten Figuren 6 und 7 lediglich schematisch ist. Insbesondere kann abweichend von der Darstellung dieser Figuren vorgesehen sein, dass die Rohrleitung 21 ohne Knickstellen auskommt und dass das Rohrleitungsende 22 an einem Endabschnitt der Rohrleitung 21 ausgebildet ist, der nicht schräg, sondern in Strömungsrichtung in den Sekundärstromkanal 4 ragt, wie noch erläutert werden wird.

Die die Figur 6 zeigt ein Ausführungsbeispiel, das sich vom Ausführungsbeispiel der Figur 4 dadurch unterscheidet, dass das Rohrleitungsende 22 in geringem Abstand vor einem Mischer 45 im Sekundärstromkanal 4 endet, der eine Vermischung von Primärstrom und Sekundärstrom des Turbofantriebwerk 100 vornimmt. Das Rohrleitungsende 22 endet dabei angrenzend an die Innenwand 42, jedoch in definiertem Abstand zu dieser.

Die Figur 7 zeigt ein Ausführungsbeispiel, dass sich vom Ausführungsbeispiel der Figur 5 dadurch unterscheidet, dass das Rohrleitungsende 22 in geringem Abstand vor einem Mischer 45 im Sekundärstromkanal 4 endet. Das Rohrleitungsende 22 endet ebenfalls angrenzend an die Innenwand 42, jedoch in definiertem Abstand zu dieser.

Für die Ausführungsbeispiele der Figuren 4 bis 7 gilt, dass das Rohrleitungsende 22 derart im Sekundärstromkanal 4 platziert ist, dass sich hinter dem Rohrleitungsende 22 keine weiteren Strukturen oder Öffnungen (beispielsweise für Zapfluft) im Sekundärstromkanal 4 befinden, so dass die in den Sekundärstromkanal 4 eingeblasene Abblaseluft nicht oder in nur geringem Maße verwirbelt.

Des Weiteren gilt für sämtliche der Ausführungsbeispiele der Figuren 4-7, das Rohrleitungsende 22 in den hinteren 20%, insbesondere in den hinteren 10% der axialen Länge des Sekundärstromkanals 4 in diesem angeordnet ist. Wenn also die axiale Erstreckung des Sekundärstromkanals 4 zwischen Fan 10 und Mischer 45 betrachtet wird, so ist das Rohrleitungsende 22 an einem Ort im Sekundärstromkanal 4 angeordnet, der in den 20% oder den 10% der axialen Erstreckung des Sekundärstromkanals 4 liegt, die vor dem Mischer 45 ausgebildet sind. Bei den Ausführungsbeispielen der Figuren 4 und 5 ist der axiale Abstand des Rohrleitungsendes 22 zum Mischer 45 dabei größer als bei den Ausführungsbeispielen der Figuren 6 und 7. Er liegt bei den Ausführungsbeispielen der Figuren 6 und 7 beispielsweise in den hinteren 10%, insbesondere in den hinteren 5% der axialen Länge des Sekundärstromkanals 4.

Des Weiteren gilt auch für die Figuren 6 und 7, dass das Rohrleitungsende 22 in Strömungsrichtung axial beanstandet zum axial hinteren Ende der Strebe 41 angeordnet ist.

Die Figur 8 zeigt in perspektivischer Ansicht die Außenkonturen der Triebwerksstrukturen, die das Kerntriebwerk umhüllen. Im Hinblick auf den Sekundärstromkanal ist lediglich eine ringförmige Stützstruktur 19 dargestellt, die das Fangehäuse strukturell stützt und Leitschaufeln ausbilden kann, sowie eine Strebe 41, die sich in radialer Richtung zwischen Innenwand und Außenwand des Sekundärstromkanals erstreckt und beispielsweise der radialen Durchführung von Triebwerksinstrumentierungen und Leitungen für Druckluft, Treibstoff oder Öl durch den Sekundärstromkanal dient. Des Weiteren ist ein Mischer 45 dargestellt, der den Primärstrom des Primärstromkanals und den Sekundärstrom des Sekundärstromkanals am Triebwerksausgang vermischt. Die Strebe 41 erstreckt sich stromabwärts der ringförmigen Stützstruktur 19 zwischen der Stützstruktur 19 und dem Mischer 45.

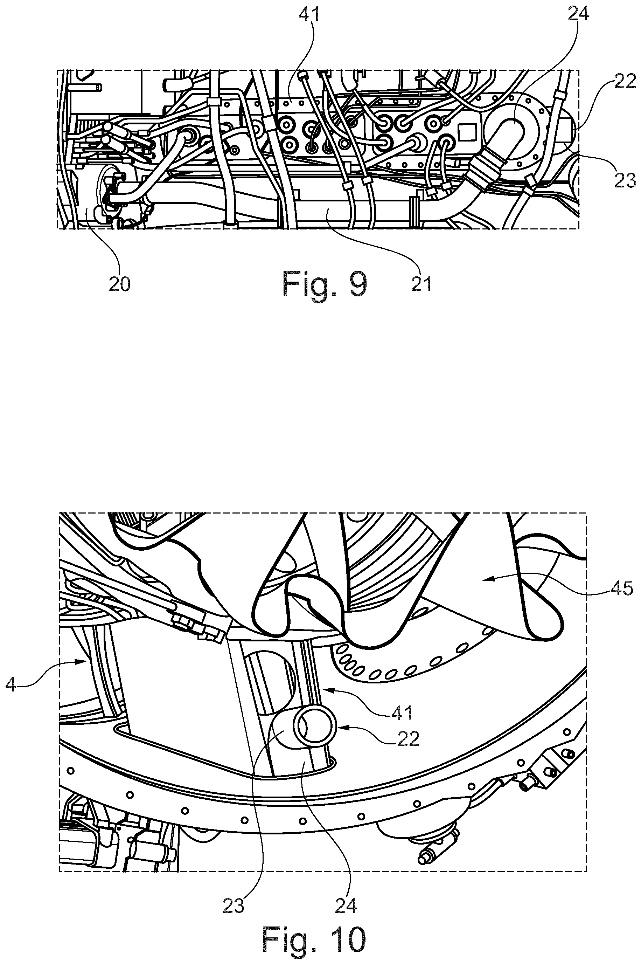

Wie auch den Figuren 9 und 10 zu entnehmen ist, die Detaildarstellungen der Figur 8 sind, verläuft die Rohrleitung 21 zumindest teilweise in der Strebe 41. So bildet die Rohrleitung 21 vor dem Rohrleitungsende 22 einen ersten hinteren Abschnitt 24 und einen sich daran anschließenden zweiten hinteren Abschnitt 23 aus, wobei der zweite hintere Abschnitt 23 das Rohrleitungsende 22 ausbildet. Der erste hintere Abschnitt 24 und der zweite hintere Abschnitt 23 verlaufen rechtwinklig zueinander. Der erste hintere Abschnitt 24 ist dabei in der Strebe 41 angeordnet. Der zweite hintere Abschnitt 22 verläuft teilweise in der Strebe 41, steht aber gegenüber dieser in Strömungsrichtung ab, so dass sich das Rohrleitungsende 22 frei, ohne umgebende Strukturen, im Sekundärstromkanal 4 befindet.

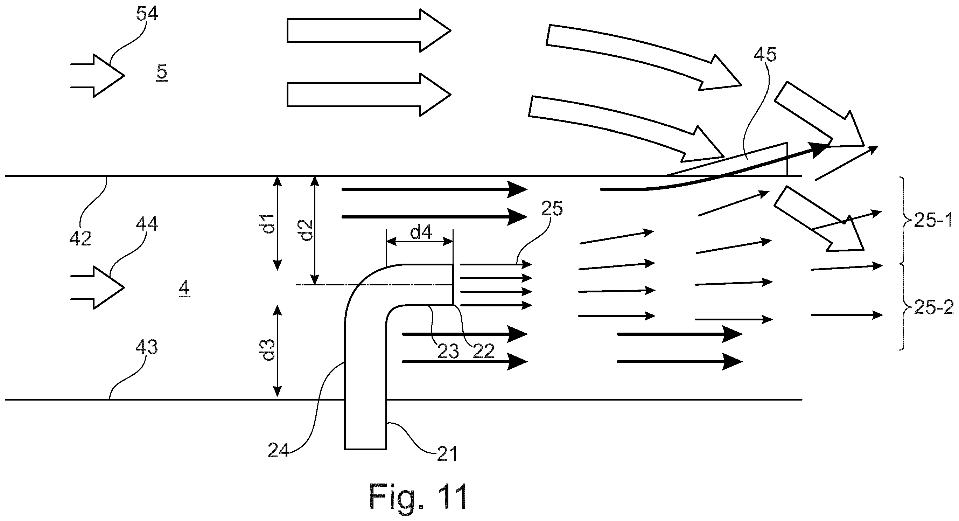

Die Figur 11 illustriert schematisch die Anordnung des Rohrleitungsendes 22 einer Rohrleitung 21 zum Abführen von Abblaseluft eines Ölabscheiders im Sekundärstromkanal 4. Die Rohrleitung 21 umfasst einen Endabschnitt 23, der das Rohrleitungsende 22 ausbildet.

Es sind schematisch der Primärstromkanal 5 und der Sekundärstromkanal 4 dargestellt, die eine Primärströmung 54 und eine Sekundärströmung 44 aufweisen. Die Primärströmung 54 und die Sekundärströmung 44 werden am Triebwerksausgang in einem Mischer 45 miteinander vermischt. Der Sekundärstromkanal 4 umfasst eine Innenwand 42 und eine Außenwand 43.

Der Endabschnitt 23 der Rohrleitung 21 erstreckt sich über eine Länge d4 in Richtung der Sekundärströmung 44. Der Endabschnitt 23 ist dazu gerade ausgebildet und derart ausgerichtet, dass er zumindest näherungsweise auf einer Meridionallinie verläuft, d.h. auf einer Linie, deren Punkte das gleiche Abstandsverhältnis zu Innenwand 42 und Außenwand 43 des Sekundärstromkanals 4 aufweisen. Durch Führen der Abblaseluft im Endabschnitt 23 wird erreicht, dass die in der Rohrleitung 21 geführte Abblaseluft bereits eine Ausrichtung parallel zur Strömungsrichtung erfährt, bevor die Abblaseluft in die Strömung 44 abgeblasen wird. Hierdurch wird eine Verwirbelung der Abblaseluft, die in Figur 11 mit 25 bezeichnet ist, vermieden oder minimiert. Die Länge d4 beträgt gemäß einem Ausführungsbeispiel das Fünffache des Innendurchmesser des kreisförmigen Rohrleitungsendes 22.

Die Figur 11 zeigt weiter einen Mindestabstand d1 und einen Maximalabstand d2, den das Rohrleitungsende 22 von der Innenwand 42 aufweist. Der Mindestabstand d1 ist beispielsweise gleich dem Innendurchmesser des Rohrleitungsendes 22. Der Maximalabstand d2 kann so bemessen sein, dass das Rohrleitungsende 22 näher zur Innenwand 42 angeordnet ist als zur Außenwand 43 des Sekundärstromkanals 4. So ist in einer Ausgestaltung der Erfindung vorgesehen, dass sich das Rohrleitungsende 22 näher zur Innenwand 42 befindet. Hierdurch wird sichergestellt, dass ein Anteil der Abblaseluft 25 dem Mischer 45 zugeführt und durch diesen verteilt wird. Beispielsweise beträgt der Maximalabstand des Zehnfache, das Fünffache oder das Zweifache des Innendurchmessers des Rohrleitungsendes 22.

Die Figur 11 zeigt auch einen Mindestabstand d3 des Rohrleitungsendes 22 zur Außenwand 43. Auch dieser Mindestabstand d3 ist beispielsweise gleich dem Innendurchmesser des kreisförmigen Rohrleitungsendes 22.

Die aus dem Rohrleitungsende 22 abgeblasene Abblaseluft 25 wird aufgrund ihrer parallelen Ausrichtung mit der Strömung 44 im Wesentlichen ohne Verwirbelungen abgeblasen. Die Abblaseluft 25 strömt daher im Wesentlichen parallel zur Sekundärströmung 44, wie in der Figur 11 dargestellt ist. Bei geeigneter Anordnung des Rohrleitungsendes 22 benachbart zur Innenwand 42 wird ein Teil 25-1 der Abblaseluft 25 dem Mischer 45 zugeführt, während ein anderer Teil 25-2 der Abblaseluft am Mischer 45 vorbeigeführt wird und am Mischvorgang nicht partizipiert. Hierdurch kann eine möglichst große Austrittsfläche für die Abblaseluft 25 und damit eine möglichst starke Verdünnung enthaltener Ölpartikel erreicht werden.

Abhängig von der Platzierung des Rohrleitungsendes 22 im Sekundärstromkanal 4 kann erreicht werden, dass die Abblaseluft 25 vollständig, teilweise oder überhaupt nicht dem Mischer 45 zugeführt wird.

In der Regel weist die Sekundärströmung 44 eine höhere Fließgeschwindigkeit auf als die Abblaseluft 25. In geringem Umfang besteht daher ein Sogeffekt, der Abblaseluft 25 aus dem Rohrleitungsende 22 saugt.

Die vorliegende Erfindung beschränkt sich in ihrer Ausgestaltung nicht auf die vorstehend beschriebenen Ausführungsbeispiele, die lediglich beispielhaft zu verstehen sind. Beispielsweise sind Form und Anordnung der Rohrleitung zum Ableiten von Abblaseluft lediglich beispielhaft zu verstehen.

Des Weiteren wird darauf hingewiesen, dass die Merkmale der einzelnen beschriebenen Ausführungsbeispiele der Erfindung in verschiedenen Kombinationen miteinander kombiniert werden können. Sofern Bereiche definiert sind, so umfassen diese sämtliche Werte innerhalb dieser Bereiche sowie sämtliche Teilbereiche, die in einen Bereich fallen.

## Patentansprüche

1. Turbofantriebwerk, das aufweist:
- einen Primärstromkanal (5), in dem im Betrieb ein Primärstrom (54) einen Gasgenerator (30, 40, 50) durchströmt;
- einen Sekundärstromkanal (4), in dem im Betrieb ein Sekundärstrom (44) am Gasgenerator (30, 40, 50) vorbeigeleitet wird, und
- einen Ölabscheider (20) eines Schmierölsystems, der eine Rohrleitung (21) zum Ableiten von Abblaseluft aufweist, wobei die Rohrleitung (21) ein Rohrleitungsende (22) ausbildet,
- wobei das Rohrleitungsende (22) im Sekundärstromkanal (4) angeordnet und dazu vorgesehen und ausgebildet ist, Abblaseluft direkt vom Rohrleitungsende (22) in den Sekundärstromkanal (4) abzugeben,
**dadurch gekennzeichnet,**
**dass** die Rohrleitung (21) des Ölabscheiders (20) zumindest teilweise in einer im Sekundärstromkanal (4) angeordneten Struktur (41) verläuft, wobei das Rohrleitungsende (22) von dem axial hinteren Ende der Struktur (41) in Strömungsrichtung absteht, wobei das Rohrleitungsende (22) in den hinteren 20% der axialen Länge des Sekundärstromkanals (4) in diesem angeordnet ist.

2. Turbofantriebwerk nach Anspruch 1, **dadurch gekennzeichnet, dass** das Rohrleitungsende (22) an einem Endabschnitt (23) der Rohrleitung (21) ausgebildet ist, der parallel zur Strömungsrichtung im Sekundärstromkanal (4) verläuft.

3. Turbofantriebwerk nach Anspruch 1 oder 2, **dadurch gekennzeichnet, dass** das Turbofantriebwerk (100) einen Mischer (45) aufweist, der eine Vermischung von Primärstrom (54) und Sekundärstrom (44) vornimmt, wobei das Rohrleitungsende (22) derart im Sekundärstromkanal (4) platziert ist, dass zumindest ein Teil der vom Rohrleitungsende (4) abgegebenen Abblaseluft dem Mischer (45) zugeführt wird.

4. Turbofantriebwerk nach Anspruch 3, **dadurch gekennzeichnet, dass** das Rohrleitungsende (22) derart im Sekundärstromkanal (4) platziert ist, dass mindestens 30%, insbesondere mindestens 50%, insbesondere mindestens 70% der vom Rohrleitungsende (22) abgegebenen Abblaseluft dem Mischer (45) zugeführt und in diesem mit Luft des Primärstromkanals (5) vermischt wird.

5. Turbofantriebwerk nach einem der vorangehenden Ansprüche, **dadurch gekennzeichnet, dass** der Sekundärstromkanal (4) eine Innenwand (42) und eine Außenwand (43) aufweist, zwischen denen der Sekundärstromkanal (4) als Ringraum ausgebildet ist, wobei das Rohrleitungsende (22) näher zur Innenwand (42) angeordnet ist.

6. Turbofantriebwerk nach einem der vorangehenden Ansprüche, **dadurch gekennzeichnet, dass** das Rohrleitungsende (22) an einem Ort im Sekundärstromkanal (4) platziert ist, hinter dem sich in Strömungsrichtung keine Strukturen im Sekundärstromkanal (4) befinden.

7. Turbofantriebwerk nach einem der vorangehenden Ansprüche, **dadurch gekennzeichnet, dass** das Rohrleitungsende (22) in den hinteren 10% der axialen Länge des Sekundärstromkanals (4) in diesem angeordnet ist.

8. Turbofantriebwerk nach einem der vorangehenden Ansprüche, **dadurch gekennzeichnet, dass** im Sekundärstromkanal (4) als Struktur eine Strebe angeordnet ist, die sich in radialer Richtung im Sekundärstromkanal (4) erstreckt, wobei die Rohrleitung (21) zumindest teilweise in der Strebe (41) angeordnet ist und das Rohrleitungsende (22) vom axial hinteren Ende der Strebe (41) in Strömungsrichtung absteht.

9. Turbofantriebwerk nach Anspruch 8, **dadurch gekennzeichnet, dass** ein hinterer Abschnitt der vom Ölabscheider kommenden Rohrleitung (21) rechtwinklig ausgebildet ist, wobei ein erster Abschnitt (24) in die Strebe (41) in radialer Richtung hineinragt und ein senkrecht vom ersten Abschnitt (24) abstehender zweiter Abschnitt (23) aus dem axial hinteren Ende der Strebe (41) herausragt und Abblaseluft beabstandet vom axial hinteren Ende der Strebe (41) in den Sekundärstromkanal (4) abbläst.

10. Turbofantriebwerk nach einem der vorangehenden Ansprüche, **dadurch gekennzeichnet, dass** der Endabschnitt (23) der Rohrleitung (21) eine Länge (d4) aufweist, die mindestens gleich dem Innendurchmesser des Rohrleitungsendes (22) ist.

11. Verfahren zum Abführen von Abblaseluft eines Ölabscheiders (20) in einem Turbofantriebwerk (100), wobei die Abblaseluft mittels einer Rohrleitung (21) des Ölabscheiders (22), die ein Rohrleitungsende (22) umfasst, abgeführt wird, wobei die Abblaseluft mittels der Rohrleitung (21) direkt in den Sekundärstromkanal (4) des Turbofantriebwerks (100) abgeführt wird, wobei das Rohrleitungsende (22) im Sekundärstromkanal (4) angeordnet ist und die Abblaseluft von diesem direkt in den Sekundärstromkanal (4) abgeführt wird,
**dadurch gekennzeichnet,**
**dass** die Rohrleitung (21) des Ölabscheiders (22) zumindest teilweise in einer in den Sekundärstromkanal (4) integrierten Struktur (41) verläuft, wobei das Rohrleitungsende (22) von dem axial hinteren Ende der Struktur (41) in Strömungsrichtung absteht und in axialem Abstand von der Struktur (41) Abblaseluft abführt, und wobei die Abblaseluft in den hinteren 20% der axialen Länge des Sekundärstromkanals (4) in diesen abgeblasen wird.

12. Verfahren nach Anspruch 11, **dadurch gekennzeichnet, dass** die Abblaseluft vor ihrem Abführen in einem Endabschnitt (23) der Rohrleitung (21), der im Sekundärstromkanal (4) angeordnet ist und in diesem parallel zur Strömungsrichtung (44) verläuft, transportiert wird, und anschließend im Wesentlichen parallel zur Strömungsrichtung (44) abgeführt wird.

13. Verfahren nach Anspruch 11 oder 12, **dadurch gekennzeichnet, dass** die Abblaseluft näher zur Innenwand (42) des Sekundärstromkanals (4) in den Sekundärstromkanal (4) abgeführt wird.

14. Verfahren nach einem der Ansprüche 11 bis 13, **dadurch gekennzeichnet, dass** die Abblaseluft derart vor einem Mischer (45), der eine Vermischung von Primärstrom (54) und Sekundärstrom (44) vornimmt, in den Sekundärstromkanal (4) abgeführt wird, dass ein Teil der abgeführten Abblaseluft dem Mischer (45) zugeführt und ein Teil der abgeführten Abblaseluft am Mischer (45) vorbei geführt wird.

15. Verfahren nach einem der Ansprüche 11 bis 14, **dadurch gekennzeichnet, dass** die Abblaseluft in den hinteren 10% der axialen Länge des Sekundärstromkanals (4) in diesen abgeblasen wird.

## Claims

1. Turbofan engine, comprising:
- a primary flow channel (5) inside of which a primary flow (54) flows through a gas generator (30, 40, 50) during operation;
- a secondary flow channel (4) inside of which a secondary flow (44) is guided past the gas generator (30, 40, 50) during operation, and
- an oil separator (20) of a lube oil system that has a pipeline (21) for discharging breather air, wherein the pipeline (21) forms a pipeline end (22),
- wherein the pipeline end (22) is arranged inside the secondary flow channel (4) and is provided and configured for the purpose of discharging breather air directly from the pipeline end (22) into the secondary flow channel (4),
**characterized in that**
the pipeline (21) of the oil separator (20) at least partially extends inside a structure (41) that is arranged inside the secondary flow channel (4), wherein the pipeline end (22) projects from the axially rear end of the structure (41) in the flow direction, wherein the pipeline end (22) is arranged inside the secondary flow channel (4) in the rear 20% of the axial length of the same.

2. Turbofan engine according to claim 1, **characterized in that** the pipeline end (22) is formed at an end section (23) of the pipeline (21) that extends in parallel to the flow direction inside the secondary flow channel (4).

3. Turbofan engine according to claim 1 or 2, **characterized in that** the turbofan engine has a mixer (45) that performs intermixing of the primary flow (54) and the secondary flow (44), wherein the pipeline end (22) is placed inside the secondary flow channel (4) in such a manner that at least a portion of the breather air discharged at the pipeline end (4) is supplied to the mixer (45).

4. Turbofan engine according to claim 3, **characterized in that** the pipeline end (22) is placed inside the secondary flow channel (4) in such a manner that at least 30%, in particular at least 50%, in particular at least 70% of the breather air discharged at the pipeline end (22) is supplied to a mixer (45) and therein is intermixed with the air of the primary flow channel (5).

5. Turbofan engine according to any of the preceding claims, **characterized in that** the secondary flow channel (4) has an inner wall (42) and an outer wall (43) between which the secondary flow channel (4) is formed as an annular space, wherein the pipeline end (22) is arranged closer to the inner wall (42).

6. Turbofan engine according to any of the preceding claims, **characterized in that** the pipeline end (22) is placed at a location in the secondary flow channel (4) behind which no structures are located in the secondary flow channel (4) in the flow direction.

7. Turbofan engine according to any of the preceding claims, **characterized in that** the pipeline end (22) is arranged inside the secondary flow channel (4) in the rear 10% of the axial length of the same.

8. Turbofan engine according to any of the preceding claims, **characterized in that** a strut is arranged as structure in the secondary flow channel (4), extending in the radial direction inside the secondary flow channel (4), wherein the pipeline (21) is at least partially arranged inside the strut (41) and the pipeline end (22) projects from the axially rear end of the strut (41) in the flow direction.

9. Turbofan engine according to claim 8, **characterized in that** a rear section of the pipeline (21) coming from the oil separator is formed in a rectangular manner, wherein a first section (24) projects into the strut (41) in the radial direction and a second section (23) that protrudes perpendicularly from the first section (24) projects from the axially rear end of the strut (41) and discharges breather air into the secondary flow channel at a distance from the axially rear end of the strut (41).

10. Turbofan engine according to any of the preceding claims, **characterized in that** the end section (23) of the pipeline (21) has a length (d4) that is at least equal to the inner diameter of the pipeline end (22).

11. Method for exhausting breather air of an oil separator (20) in a turbofan engine (100), wherein the breather air is exhausted by means of a pipeline (21) of the oil separator (22) that comprises a pipeline end (22), wherein the breather air is exhausted by means of the pipeline (21) directly into the secondary flow channel (4) of the turbofan engine (100), wherein the pipeline end (22) is arranged inside the secondary flow channel (4) and the breather air is exhausted from the same directly into the secondary flow channel (4),
**characterized in that**
the pipeline (21) of the oil separator (22) extends at least partially inside a structure (41) that is integrated inside the secondary flow channel (4), wherein the pipeline end (22) protrudes from the axially rear end of the structure (41) in flow direction and exhausts breather air at an axial distance from the structure (41), and wherein the breather air is blown off into the secondary flow channel (4) in the rear 20% of the axial length of the same.

12. Method according to claim 11, **characterized in that,** before being exhausted, the breather air is transported in an end section (23) of the pipeline (21) which is arranged inside the secondary flow channel (4) and extends inside the same in parallel to the flow direction (44), and **in that** it is subsequently exhausted substantially in parallel to the flow direction (44).

13. Method according to claim 11 or 12, **characterized in that** the breather air is exhausted into the secondary flow channel (4) closer to the inner wall (42) of the secondary flow channel (4).

14. Method according to one of the claims 11 to 13, **characterized in that** the breather air is exhausted into the secondary flow (4) in front of a mixer (45), which performs an intermixing of the primary flow (54) and the secondary flow (44), namely in such a manner that a part of the exhausted breather air is supplied to the mixer (45) and a part of the exhausted breather air is guided past the mixer (45).

15. Method according to one of the claims 11 to 13, **characterized in that** the breather air is exhausted into the secondary flow (4) in the rear 10%, of the axial length of the same.

## Revendications

1. Turbopropulseur, qui présente:
- un canal de flux primaire (5), dans lequel en fonctionnement un flux primaire (54) traverse un générateur de gaz (30, 40, 50);
- un canal de flux secondaire (4), dans lequel en fonctionnement un flux secondaire (44) est guidé en contournement du générateur de gaz (30, 40, 50), et
- un séparateur d'huile (20) d'un système d'huile de lubrification, qui présente une conduite tubulaire (21) destinée à évacuer de l'air expulsé, dans lequel la conduite tubulaire (21) forme une extrémité de conduite tubulaire (22),
- dans lequel l'extrémité de conduite tubulaire (22) est disposée dans le canal de flux secondaire (4) et est prévue et configurée pour décharger de l'air expulsé directement de l'extrémité de conduite tubulaire (22) dans le canal de flux secondaire (4),
**caractérisé en ce que** la conduite tubulaire (21) du séparateur d'huile (20) s'étend au moins en partie dans une structure (41) disposée dans le canal de flux secondaire (4), dans lequel l'extrémité de conduite tubulaire (22) sort de l'extrémité axialement arrière de la structure (41) dans la direction d'écoulement, dans lequel l'extrémité de conduite tubulaire (22) est disposée dans le canal de flux secondaire (4) dans les 20 % arrière de la longueur axiale de celui-ci.

2. Turbopropulseur selon la revendication 1, **caractérisé en ce que** l'extrémité de conduite tubulaire (22) est formée sur une partie d'extrémité (23) de la conduite tubulaire (21), qui s'étend parallèlement à la direction d'écoulement dans le canal de flux secondaire (4).

3. Turbopropulseur selon une revendication 1 ou 2, **caractérisé en ce que** le turbopropulseur (100) présente un mélangeur (45), qui opère un mélange du flux primaire (54) et du flux secondaire (44), dans lequel l'extrémité de conduite tubulaire (22) est placée dans le canal de flux secondaire (4) de telle manière qu'au moins une partie de l'air expulsé déchargé de l'extrémité de conduite tubulaire (22) soit envoyée au mélangeur (45).

4. Turbopropulseur selon la revendication 3, **caractérisé en ce que** l'extrémité de conduite tubulaire (22) est placée dans le canal de flux secondaire (4), de telle manière qu'au moins 30 %, en particulier au moins 50 %, et en particulier au moins 70 % de l'air expulsé déchargé de l'extrémité de conduite tubulaire (22) soient envoyés au mélangeur (45) et soient mélangés dans celui-ci avec de l'air du canal de flux primaire (5).

5. Turbopropulseur selon l'une quelconque des revendications précédentes, **caractérisé en ce que** le canal de flux secondaire (4) présente une paroi intérieure (42) et une paroi extérieure (43), entre lesquelles le canal de flux secondaire (4) est réalisé sous la forme d'un espace annulaire, dans lequel l'extrémité de conduite tubulaire (22) est disposée plus près de la paroi intérieure (42).

6. Turbopropulseur selon l'une quelconque des revendications précédentes, **caractérisé en ce que** l'extrémité de conduite tubulaire (22) est placée en un endroit dans le canal de flux secondaire (4), derrière lequel il ne se trouve dans la direction d'écoulement aucune structure dans le canal de flux secondaire (4).

7. Turbopropulseur selon l'une quelconque des revendications précédentes, **caractérisé en ce que** l'extrémité de conduite tubulaire (22) est disposée dans le canal de flux secondaire (4) dans les 10 % arrière de la longueur axiale de celui-ci.

8. Turbopropulseur selon l'une quelconque des revendications précédentes, **caractérisé en ce qu'**une entretoise est disposée en tant que structure dans le canal de flux secondaire (4), et s'étend en direction radiale dans le canal de flux secondaire (4), dans lequel la conduite tubulaire (21) est disposée au moins en partie dans l'entretoise (41) et l'extrémité de conduite tubulaire (22) sort de l'extrémité axialement arrière de l'entretoise (41) dans la direction d'écoulement.

9. Turbopropulseur selon la revendication 8, **caractérisé en ce qu'**une partie arrière de la conduite tubulaire (21) venant du séparateur d'huile est réalisée sous forme perpendiculaire, dans lequel une première partie (24) pénètre en direction radiale dans l'entretoise (41) et une seconde partie (23) saillante perpendiculairement sur la première partie (24) sort de l'extrémité arrière de l'entretoise (41) et rejette de l'air expulsé dans le canal de flux secondaire (4) à distance de l'extrémité axialement arrière de l'entretoise (41).

10. Turbopropulseur selon l'une quelconque des revendications précédentes, **caractérisé en ce que** la partie d'extrémité (23) de la conduite tubulaire (21) présente une longueur (d4), qui est au moins égale au diamètre intérieur de l'extrémité de conduite tubulaire (22).

11. Procédé pour évacuer de l'air expulsé d'un séparateur d'huile (20) dans un turbopropulseur (100), dans lequel on évacue l'air expulsé au moyen d'une conduite tubulaire (21) du séparateur d'huile (22), qui comprend une extrémité de conduite tubulaire (22), dans lequel on évacue l'air expulsé au moyen de la conduite tubulaire (21) directement dans le canal de flux secondaire (4) du turbopropulseur (100), dans lequel l'extrémité de conduite tubulaire (22) est disposée dans le canal d'air secondaire (4) et on évacue l'air expulsé hors de celle-ci directement dans le canal de flux secondaire (4),
**caractérisé en ce que** la conduite tubulaire (21) du séparateur d'huile (22) s'étend au moins en partie dans une structure (41) intégrée dans le canal de flux secondaire (4), dans lequel l'extrémité de conduite tubulaire (22) sort de l'extrémité axialement arrière de la structure (41) dans la direction d'écoulement et évacue l'air expulsé à distance axiale de la structure (41), et dans lequel on rejette l'air expulsé dans le canal de flux secondaire (4) dans les 20 % arrière de la longueur axiale de celui-ci.

12. Procédé selon la revendication 11, **caractérisé en ce que** l'on transporte l'air expulsé avant son évacuation dans une partie d'extrémité (23) de la conduite tubulaire (21), qui est disposée dans le canal de flux secondaire (4) et qui s'étend dans celui-ci parallèlement à la direction d'écoulement (44), et on l'évacue ensuite essentiellement parallèlement à la direction d'écoulement (44).

13. Procédé selon une revendication 11 ou 12, **caractérisé en ce que** l'on évacue l'air expulsé dans le canal de flux secondaire (4) plus près de la paroi intérieure (42) du canal de flux secondaire (4).

14. Procédé selon l'une quelconque des revendications 11 à 13, **caractérisé en ce que** l'on évacue l'air expulsé dans le canal de flux secondaire (4) avant un mélangeur (45), qui opère un mélange du flux primaire (54) et du flux secondaire (44), de telle manière qu'une partie de l'air expulsé évacué soit envoyée au mélangeur (45) et qu'une partie de l'air expulsé évacué soit guidée de façon à contourner le mélangeur (45).

15. Procédé selon l'une quelconque des revendications 11 à 14, **caractérisé en ce que** l'on rejette l'air expulsé dans le canal de flux secondaire (4) dans les 10 % arrière de la longueur axiale de celui-ci.
